# EUROPÄISCHE PATENTSCHRIFT

(11) **EP 3 517 810 B1**
(45) Veröffentlichungstag und Bekanntmachung des Hinweises auf die Patenterteilung: **09.06.2021**
(21) Anmeldenummer: 19153121.9
(22) Anmeldetag: 22.01.2019
(51) Int. Cl.: F16K 31/06

(54) **DRUCKAUSGEGLICHENES MAGNETVENTIL**
PRESSURE-COMPENSATED SOLENOID VALVE
SOUPAPE ÉLECTROMAGNÉTIQUE À COMPENSATION DE PRESSION

(30) Priorität: 26.01.2018 DE 102018101767
(43) Veröffentlichungstag der Anmeldung: 31.07.2019
(73) Patentinhaber: RAPA Automotive GmbH & Co. KG, 95100 Selb (DE)
(72) Erfinder: Schlick, Matthias, 95100 Selb (DE)
(74) Vertreter: Klunker IP Patentanwälte PartG mbB

(56) Entgegenhaltungen:
- DE-A1- 10 047 399
- DE-A1- 10 200 915
- DE-A1- 19 936 711

## Beschreibung

Die vorliegende Erfindung betrifft einerseits ein druckausgeglichenes Magnetventil und andererseits ein Verfahren zur Herstellung eines solchen Magnetventils, insbesondere zur Verwendung in einem Luftfedersystem eines Fahrzeugs.

Luftfedersysteme haben sich in den vergangenen Jahren im Bereich der Nutzfahrzeuge etabliert und finden zunehmend verstärkt bei Personenkraftwagen Anwendung, insbesondere bei Fahrzeugen der oberen Mittelklasse, der Ober-und Luxusklasse sowie bei sogenannten SUVs (Sport Utility Vehicles).

Mit Hilfe eines Luftfedersystems kann ein lastenunabhängiges Federungs- und Schwingungsverhalten eines Fahrzeugs erzielt werden. Luftfedersysteme umfassen dazu Luftfederbälge, wobei typischerweise jeweils ein Luftfederbalg pro Rad als elastisches Bauelement zwischen einer Achse und einem Fahrzeugaufbau des Fahrzeugs zum Einsatz kommt. Durch Druckveränderung im Luftfederbalg kann fortlaufend der gleiche Abstand zwischen der Fahrbahn und dem Fahrzeugaufbau reguliert werden. Ferner kann die Einstiegs- oder die Beladungshöhe des Fahrzeugs auf ein gewünschtes Niveau eingestellt werden.

Zur Veränderung und Regulierung des Balgdrucks finden typischerweise Magnetventile Anwendung. Dazu wird, je nach Stellung des Ventils, ein Durchlass für einen Luftfluss geweitet oder verengt, sodass Luft innerhalb eines Luftkreislaufes zum entsprechenden Balg fließen oder aber von diesem Balg abfließen kann, oder aber ganz geschlossen. Mit anderen Worten, die Luftfederbälge werden mit Hilfe von Magnetventilen belüftet oder entlüftet oder gesperrt. Typischerweise verbindet ein Luftkreislauf unter anderem jeweils die beiden Luftfederbälge einer Achse miteinander, wobei mittels eines Magnetventils der Luftfluss zwischen den beiden Bälgen geregelt werden kann.

Magnetventile weisen dazu in der Regel eine zur Erzeugung eines elektromagnetischen Feldes elektrisch bestrombare Spule auf. Zudem umfassen derartige Ventile üblicherweise einen sich entlang einer Längsachse der Spule beweglichen Magnetanker, welcher mit einem Stößel verbunden ist. Magnetanker und Stößel werden zusammen auch als Stellglied bezeichnet. Das Stellglied kann mittels der bestrombaren Spule in der dem Fachmann geläufigen Weise axial verschoben werden, sodass die Stellung des Ventils und damit der Durchlass für den Luftfluss geregelt werden kann.

Um derartige Magnetventile möglichst kompakt zu bauen finden typischerweise druckausgeglichene Sitzventile Anwendung. Bei diesen Ventilen sind der Magnetanker und der Stößel druckausgeglichen. Dadurch müssen beim Öffnen des Ventils mittels der bestrombaren Spule keine druckresultierenden Kräfte überwunden werden. Überwunden werden müssen lediglich von einer oder mehreren am Stellglied befindlichen Dichtungen hervorgerufene Reibkräfte und die Federkraft einer Feder, welche z. B. bei einem "normal geschlossenem" Ventil das Stellglied im geschlossenen Zustand des Ventils in einen Ventilsitz drückt.

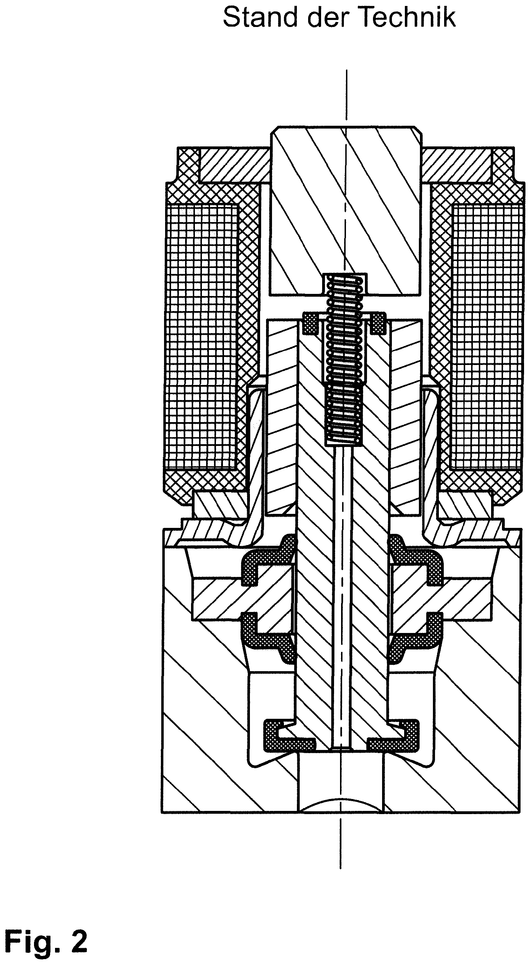

Der Druckausgleich erfolgt typischerweise mittels einer durch das Stellglied axial verlaufenden Druckausgleichsbohrung. Ein druckausgeglichenes Magnetventil mit einer derartigen Bohrung ist schematisch in Fig. 2 dargestellt. Stößel und Magnetanker eines solchen Magnetventils sind spanend hergestellte Bauteile, welche insbesondere durch Drehverfahren gefertigt werden. Im Anschluss an das Drehen erfolgt typischerweise ein Bohren der Druckausgleichsbohrung in den Stößel, welcher in der Regel aus Messing gefertigt ist. Mitunter wird der ferromagnetische Magnetanker mit einer Bohrung versehen, in welche der Stößel bei der Montage des Magnetventils eingepresst wird. Die Herstellung derartiger Magnetventile ist dementsprechend aufwendig und zeitintensiv und folglich mit hohen Kosten verbunden.

Gattungsgemäße Magnetventile sind aus DE 100 47 399 A1, DE 102 00 915 A1 und DE 199 36 711 A1 bekannt.

Aufgabe der vorliegenden Erfindung ist es daher, einerseits ein einfaches und kostengünstiges Verfahren zur Herstellung eines druckausgeglichenen Magnetventils, insbesondere für ein Luftfedersystem eines Fahrzeuges, bereitzustellen und andererseits ein entsprechend einfach und kostengünstig herstellbares, aber dennoch stabiles und zuverlässiges, druckausgeglichenes Magnetventil bereitzustellen.

Die Aufgabe wird einerseits durch ein Verfahren zur Herstellung eines druckausgeglichenen Magnetventils und andererseits durch ein druckausgeglichenes Magnetventil mit den Merkmalen des jeweils unabhängigen Anspruchs gelöst. Weiterbildungen und vorteilhafte Ausgestaltungen sind in den abhängigen Ansprüchen angegeben.

Ein Aspekt der Erfindung betrifft ein druckausgeglichenes Magnetventil, insbesondere für ein Luftfedersystem eines Fahrzeuges, welches eine elektrisch bestrombare Spule mit einer Längsachse aufweist. Zudem umfasst das Magnetventil einen bezüglich der Längsachse der Spule beweglich gelagerten Magentanker, welcher mit einem Stößel verbunden ist, wobei zumindest der Magnetanker oder der Stößel ein werkzeugfallendes Bauteil ist.

Das der Erfindung zugrunde liegende druckausgeglichene Magnetventil ist einfach und kostengünstig herstellbar, da zumindest der Magnetanker oder der Stößel als werkzeugfallendes Bauteil ausgeführt ist. Werkzeugfallend bedeutet, dass ein Bauteil fertig aus einem Werkzeug kommt und insbesondere nicht spanend nachbearbeitet werden muss. Dementsprechend entfällt bei dem erfindungsgemäßen Magnetventil ein kosten- und zeitintensives Nachbearbeiten zumindest eines der beiden genannten Teile. Zu den werkzeugfallenden Bauteilen zählen unter anderem Tiefziehbauteile und Kaltfließpressbauteile.

Es sind sowohl der Magnetanker als auch der Stößel werkzeugfallende Bauteile. Folglich ist das Magnetventil besonders einfach und kostengünstig herstellbar, da sowohl der Magnetanker als auch der Stößel insbesondere nicht spanend nachbearbeitet werden müssen.

In einer besonders bevorzugten Ausführungsform ist der Stößel ein Tiefziehbauteil. Tiefziehen ist das Kaltumformen eines Halbzeugs oder eines Rohlings, insbesondere eines Blechzuschnitts. Dabei fährt ein Stempel linear in eine definierte Form ein. Das Halbzeug oder der Rohling werden dabei umgeformt und in die Form gepresst. Tiefziehen ist ein besonders schnelles und effizientes Verfahren um große Mengen an gleichförmigen Bauteilen, insbesondere Hohlkörperbauteilen, herzustellen. Der mittels Tiefziehen hergestellte Stößel des erfindungsgemäßen druckausgeglichenen Magnetventils ist ein Hohlkörperbauteil, welches bereits nach dem Tiefziehen einen Fügebereich zum Magnetanker umfasst und einen zum Druckausgleich notwendigen inneren Querschnitt aufweist. Ein aufwendiges spanendes Nachbearbeiten des Stößels des erfindungsgemäßen Magnetventils entfällt. Folglich ist das erfindungsgemäße druckausgeglichene Magnetventil gegenüber einem gemäß dem Stand der Technik hergestellten druckausgeglichenen Magnetventil kostengünstiger und einfacher herstellbar.

Vorzugsweise ist der Magnetanker ein Kaltfließpressbauteil. Kaltfließpressen ist ein effizientes Verfahren zur Massenproduktion. Beim Kaltfließpressen handelt es sich um eine Massivumformung, bei welcher in einem mehrstufigen Fertigungsvorgang sowohl Hohl- als auch Vollkörperbauteile erstellt werden können. Dabei wird ein Werkstückrohling unter Einwirkung eines hohen Drucks zum Fließen gebracht, wobei ein Stempel den Werkstückrohling durch eine formgebende, im Querschnitt verminderte Werkzeugöffnung, eine sogenannte Matrize, drückt. Ein aufwendiges spanendes Nachbearbeiten des mittels Kaltfließpressen hergestellten Magnetankers des erfindungsgemäßen Magnetventils entfällt. Folglich ist das erfindungsgemäße Magnetventil gegenüber einem gemäß dem Stand der Technik hergestellten druckausgeglichenen Magnetventil kostengünstiger und einfacher herstellbar.

Es ist der Stößel auf den Magnetanker derart aufgesteckt, dass er den Magnetanker zumindest teilweise umschließt. Zudem umfasst der Magnetanker in dem Umschließungsbereich zumindest einen axial verlaufenden, außenliegenden Kanal, welcher zum Druckausgleich beiträgt. Aufgrund des axial verlaufenden Kanals außen am Magnetanker ergibt sich ein axialer Durchlass zwischen einer einem Ventilsitz zugewandten axialen Öffnung des Stößels und einem ortsfesten Magnetkern des Magnetventils durch den hindurch der Druckausgleich stattfinden kann. Der Magnetanker kann auch mehr als einen außenliegenden Kanal, insbesondere zwei, drei, vier, fünf oder mehr solcher Kanäle im Umschließungsbereich aufweisen, welche zum Druckausgleich beitragen.

Ein derartig gestalteter Magnetanker des erfindungsgemäßen druckausgeglichenen Magnetventils ist als werkzeugfallendes Bauteil ausgeführt . Der Magnetanker kann insbesondere einschließlich des außenliegenden axialen Kanals formgenau mittels eines Kaltfließpressverfahrens hergestellt werden. Ein aufwendiges spanendes Nachbearbeiten des Magnetankers des erfindungsgemäßen Magnetventils entfällt.

Bevorzugt ist der Stößel auf einen Zapfen des Magnetankers derart aufgesteckt, dass zwischen einem dem Magnetanker zugewandten axialen Ende des Stößels und einer dem Stößel zugewandten axialen Teilfläche des Magnetankers zumindest teilweise eine Lücke verbleibt, welche zum Druckausgleich beiträgt. Alternativ kann der Stößel an dem dem Magnetanker zugewandten axialen Ende eine beliebige Anzahl von Aussparungen aufweisen, welche vorzugsweise mit der Anzahl und Querschnittsfläche der Kanäle des Magnetankers übereinstimmt, wobei der Stößel derart auf den Zapfen des Magnetankers aufgesteckt ist, dass jeweils eine Aussparung jeweils einen Kanal zumindest teilweise überlappt, sodass ein ungebremster Druckausgleich im Magnetventil gewährleistet ist.

Der Magnetanker und der Stößel des erfindungsgemäßen druckausgeglichenen Magnetventils sind gegenüber einem gemäß dem Stand der Technik hergestellten druckausgeglichenen Magnetventil derart umgestaltet, dass diese Teile werkzeugfallend hergestellt werden können. Ein aufwendiges spanendes Nachbearbeiten, insbesondere ein Bohren einer axialen Druckausgleichsbohrung durch den Stößel sowie ein Bohren durch den Magnetanker, damit dieser anschließend den Stößel aufnehmen kann, entfällt.

Ein weiterer Aspekt der Erfindung betrifft ein Verfahren zur Herstellung eines druckausgeglichenen Magnetventils, insbesondere für ein Luftfedersystem eines Fahrzeugs. Dabei sieht ein Verfahrensschritt vor, einen Stößel mit einem Magnetanker zu verbinden, wobei zumindest für den Stößel oder den Magnetanker ein werkzeugfallendes Bauteil verwendet wird. Bevorzugt wird sowohl für den Stößel als auch für den Magnetanker ein werkzeugfallendes Bauteil verwendet. Besonders bevorzugt wird für den Stößel ein Tiefziehbauteil und für den Magnetanker ein Kaltfließpressbauteil verwendet.

Es umfasst das Verfahren den Schritt des Herstellens des Stößels und des Magnetankers in einem werkzeugfallenden Verfahren. Mittels werkzeugfallender Verfahren hergestellte Bauteile können, wie erwähnt, speziell in der Massenfertigung besonders kostengünstig hergestellt werden, da werkzeugfallend hergestellte Bauteile insbesondere nicht spanend nachbearbeitet werden müssen.

Es erfolgt das Verbinden des Stößels mit dem Magnetanker durch Aufstecken, insbesondere Aufpressen, des Stößels auf einen Zapfen des Magnetankers. Bevorzugt erfolgt das Aufstecken derart, dass zwischen einem dem Magnetanker zugewandten axialen Ende des Stößels und einer dem Stößel zugewandten axialen Teilfläche des Magnetankers zumindest teilweise eine Lücke verbleibt, welche zum Druckausgleich beiträgt.

Eine bevorzugte Ausführungsform der Erfindung sowie weitere vorteilhafte Ausgestaltungen werden anhand der begleitenden Zeichnung näher erläutert. Es zeigen:
- Fig. 1: ein druckausgeglichenes Magnetventil, bei welchem sowohl der Magnetanker als auch der Stößel werkzeugfallende Bauteile sind, schematisch in einer Schnittdarstellung und
- Fig. 2: ein druckausgeglichenes Magnetventil nach dem Stand der Technik.

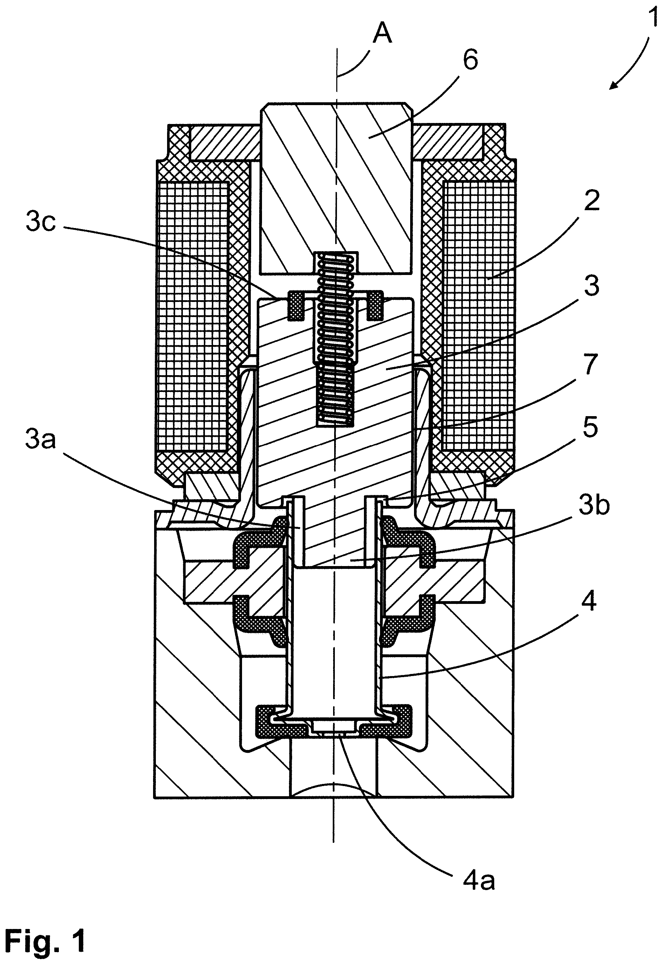

In Fig. 1 ist ein erfindungsgemäßes druckausgeglichenes Magnetventil 1, insbesondere für ein Luftfedersystem eines Fahrzeuges, in einer bevorzugten Ausführungsform dargestellt. Das Magnetventil 1 ist als Sitzventil ausgeführt und umfasst eine elektrisch bestrombare Spule 2 sowie einen bezüglich einer Längsachse A der Spule 2 beweglich gelagerten Magnetanker 3. Der aus einem ferromagnetischen Werkstoff bestehende Magnetanker 3 ist mit einem Stößel 4 verbunden. Der Stößel 4 muss keinen ferromagnetischen Werkstoff umfassen und ist vorzugsweise aus Messing gefertigt. Der Stößel kann jedoch auch aus einem anderen tiefziehfähigen Werkstoff hergestellt sein. Der Magnetanker 3 und der Stößel 4 sind werkzeugfallende Bauteile. Der Magnetanker 3 ist ein Kaltfließpressbauteil und umfasst einen dem Stößel 4 zugewandten Zapfen 3b. Der Stößel 4 wiederum ist ein Tiefziehbauteil und bildet einen Hohlkörper, welcher einen dem Zapfen 3b des Magnetankers 3 zugewandten offenen Fügebereich sowie eine zum Druckausgleich notwendige Öffnung 4a aufweist. Der Stößel 4 ist auf den Zapfen 3b des Magnetankers 3 aufgesteckt, vorzugsweise aufgepresst, wobei der Stößel 4 den Zapfen 3b des Magnetankers 3 zumindest teilweise umschließt. Der Magnetanker 3 umfasst in dem Umschließungsbereich, insbesondere am Zapfen 3b, zwei axial verlaufende, außenliegende Kanäle 3a, welche zum Druckausgleich des Magnetventils 1 beitragen. Der Stößel 4 ist derart auf den Zapfen 3b des Magnetankers 3 aufgesteckt, dass zwischen einem dem Magnetanker 3 zugewandten axialen Ende des Stößels 4 und einer dem Stößel 4 zugewandten axialen Teilfläche des Magnetankers 3 zumindest teilweise eine Lücke 5 verbleibt, welche ebenfalls zum Druckausgleich beträgt.

Der Magnetanker 3 ist derart im Magnetventil 1 angeordnet, dass zwischen einer radial außenliegenden, der Spule 2 zugewandten Oberfläche des Magnetankers 3 und den dieser Oberfläche gegenüberliegenden Bauteilen des Magnetventils 1 ein axial verlaufender, gegebenenfalls ringförmiger Spalt 7 verbleibt. Der Druckausgleich des druckausgeglichenen Magnetventils 1 kann somit über die axiale Öffnung 4a des hohlen Stößels 4, die axial verlaufenden, außenliegenden Kanäle 3a des Magnetankers 3, die zwischen Stößel 4 und Magnetanker 3 bestehende Lücke 5 und den genannten Spalt 7 bis hin zu einer einem ortsfesten Magnetkern 6 zugewandten Rückseite 3c des Magnetankers 3 erfolgen. Dadurch sind sowohl der Magnetanker 3 als auch der Stößel 4 druckausgeglichen.

## Patentansprüche

1. Druckausgeglichenes Magnetventil (1), insbesondere für ein Luftfedersystem eines Fahrzeugs, umfassend:
- eine elektrisch bestrombare Spule (2), und
- einen bezüglich einer Längsachse (A) der Spule (2) beweglich gelagerten Magnetanker (3)
- einen mit dem Magnetanker (3) verbundenen Stößel (4), wobei
- sowohl der Magnetanker (3) als auch der Stößel (4) werkzeugfallende Bauteile sind, und **gekennzeichnet dadurch, dass**
- der Stößel (4) auf den Magnetanker (3) aufgesteckt ist, sodass er den Magnetanker (3) zumindest teilweise umschließt, und der Magnetanker (3) in dem Umschließungsbereich zumindest einen axial verlaufenden, außenliegenden Kanal (3a) umfasst, welcher zum Druckausgleich beiträgt.

2. Druckausgeglichenes Magnetventil (1) nach Anspruch 1, wobei der Stößel (4) ein Tiefziehbauteil ist.

3. Druckausgeglichenes Magnetventil (1) nach Anspruch 1 oder 2, wobei der Magnetanker (3) ein Kaltfließpressbauteil ist.

4. Druckausgeglichenes Magnetventil (1) nach einem der Ansprüche 1 bis 3, wobei der Stößel (4) auf einen Zapfen (3b) des Magnetankers (3) derart aufgesteckt ist, dass zwischen einem dem Magnetanker (3) zugewandten axialen Ende des Stößels (4) und einer dem Stößel (4) zugewandten axialen Teilfläche des Magnetankers (3) zumindest teilweise eine Lücke (5) verbleibt, welche zum Druckausgleich beiträgt.

5. Verfahren zur Herstellung eines druckausgeglichenen Magnetventils (1), insbesondere für ein Luftfedersystem eines Fahrzeugs, welches eine Spule (2) mit einer Längsachse (A) aufweist, umfassend den Schritt:
- Verbinden eines Stößels (4) mit einem Magnetanker (3), wobei sowohl für den Stößel (4) als auch für den Magnetanker (3) ein werkzeugfallendes Bauteil verwendet wird, wobei
der Magnetanker (3) einen Zapfen (3b) aufweist und das Verbinden des Stößels (4) mit dem Magnetanker (3) durch Aufstecken des Stößels (4) auf den Zapfen (3b) des Magnetankers (3) erfolgt, sodass der Stößel (4) den Magnetanker (3) zumindest teilweise umschließt, wobei
der Magnetanker (3) in dem Umschließungsbereich zumindest einen axial verlaufenden, außenliegenden Kanal (3a) umfasst, welcher zum Druckausgleich beiträgt.

6. Verfahren nach Anspruch 5, wobei als Stößel (4) ein Tiefziehbauteil verwendet wird.

7. Verfahren nach Anspruch 5 oder 6, wobei als Magnetanker (3) ein Kaltfließpressbauteil verwendet wird.

8. Verfahren nach einem der Ansprüche 5 bis 7, wobei das Verbinden des Stößels (4) mit dem Magnetanker (3) durch Aufpressen des Stößels (4) auf den Zapfen (3b) des Magnetankers (3) derart erfolgt, dass zwischen einem dem Magnetanker (3) zugewandten axialen Ende des Stößels (4) und einer dem Stößel (4) zugewandten axialen Teilfläche des Magnetankers (3) zumindest teilweise eine Lücke (5) verbleibt.

9. Verwendung eines druckausgeglichenen Magnetventils (1) nach einem der Ansprüche 1 bis 4 oder eines nach einem der Ansprüche 5 bis 8 hergestellten druckausgeglichenen Magnetventils (1) in einem Luftfedersystem eines Fahrzeuges.

## Claims

1. A pressure-compensated magnetic valve (1), in particular for an air suspension system of a vehicle, comprising:
- an electrically energizable coil (2), and
- a magnetic armature (3) movably mounted with reference to a longitudinal axis (A) of the coil (2),
- a plunger (4) connected to the magnetic armature (3), wherein
- both the magnetic armature (3) and the plunger (4) are out-of-tool components, and **characterized in that**
- the plunger (4) is slipped onto the magnetic armature (3) so that it at least partially encloses the magnetic armature (3), and the magnetic armature (3) in the enclosed region comprises at least one axially extending, outer channel (3a) which contributes to pressure compensation.

2. The pressure-compensated magnetic valve (1) according to claim 1, **wherein** the plunger (4) is a deep-drawn component.

3. The pressure-compensated magnetic valve (1) according to claim 1 or 2, **wherein** the magnetic armature (3) is a cold extrusion component.

4. The pressure-compensated magnetic valve (1) according to any of claims 1 to 3, **wherein** the plunger (4) is slipped onto a pin (3b) of the magnetic armature (3) in such a manner that between an axial end of the plunger (4) facing the magnetic armature (3) and an axial partial area of the magnetic armature (3) facing the plunger (4) at least partially a gap (5) remains which contributes to pressure compensation.

5. A method for manufacturing a pressure-compensated magnetic valve (1), in particular for an air suspension system of a vehicle, which has a coil (2) with a longitudinal axis (A), comprising the step of:
- connecting a plunger (4) to a magnetic armature (3), wherein an out-of-tool component is employed for both the plunger (4) and the magnetic armature (3), wherein
the magnetic armature (3) has a pin (3b) and the connecting of the plunger (4) to the magnetic armature (3) takes place by slipping the plunger (4) onto the pin (3b) of the magnetic armature (3), such that the plunger (4) at least partially encloses the magnetic armature (3), wherein
the magnetic armature (3) in the enclosed region comprises at least one axially extending, outer channel (3a) which contributes to pressure compensation.

6. The method according to claim 5, **wherein** a deep-drawn component is employed as the plunger (4).

7. The method according to claim 5 or 6, **wherein** a cold extrusion component is employed as the magnetic armature (3).

8. The method according to any of claims 5 to 7, **wherein** the connecting of the plunger (4) to the magnetic armature (3) takes place by pressing the plunger (4) onto the pin (3b) of the magnetic armature (3) in such a manner that between an axial end of the plunger (4) facing the magnetic armature (3) and an axial partial area of the magnetic armature (3) facing the plunger (4) at least partially a gap (5) remains.

9. Employment of a pressure-compensated magnetic valve (1) according to any of claims 1 to 4 or of a pressure-compensated magnetic valve (1) manufactured according to any of claims 5 to 8 in an air suspension system of a vehicle.

## Revendications

1. Vanne magnétique (1) compensée en pression, en particulier pour un système à ressort pneumatique d'un véhicule, comprenant :
- une bobine (2) apte à être alimentée en courant électrique, et
- un induit magnétique (3) monté en mobilité par rapport à l'axe longitudinal (A) de la bobine (2),
- un poussoir (4) relié à l'induit magnétique (3), cependant que
- tant l'induit magnétique (3) que le poussoir (4) sont des composants usinés en une seule opération, et **caractérisée en ce que**
- le poussoir (4) est enfiché sur l'induit magnétique (3) de telle sorte qu'il enserre au moins partiellement l'induit magnétique (3), et l'induit magnétique (3) comprend dans la zone de l'enserrage au moins un canal (3a) axial externe qui contribue à la compensation de pression.

2. Vanne magnétique (1) compensée en pression selon la revendication 1, **cependant que** le poussoir (4) est un composant embouti.

3. Vanne magnétique (1) compensée en pression selon la revendication 1 ou 2, **cependant que** l'induit magnétique (3) est un composant de pression par flux de force.

4. Vanne magnétique (1) compensée en pression selon une des revendications de 1 à 3, **cependant que** le poussoir (4) est enfiché de telle manière sur un tenon (3b) de l'induit magnétique (3) que, entre une extrémité axiale du poussoir (4) tournée vers l'induit magnétique (3) et une surface partielle axiale de l'induit magnétique (3) tournée vers le poussoir (4), il demeure au moins partiellement un interstice (5) qui contribue à la compensation de pression.

5. Procédé de fabrication d'une vanne magnétique (1) compensée en pression, en particulier pour un système à ressort pneumatique d'un véhicule, laquelle comporte une bobine (2) ayant un axe longitudinal (A), comprenant l'étape :
- liaison d'un poussoir (4) et d'un induit magnétique (3), cependant que tant pour le poussoir (4) que pour l'induit magnétique (3), un composant usiné en une seule opération est utilisé, cependant que
l'induit magnétique (3) comporte un tenon (3b) et la liaison du poussoir (4) et de l'induit magnétique (3) a lieu par enfichage du poussoir (4) sur le tenon (3b) de l'induit magnétique (3), de telle sorte que le poussoir (4) enserre au moins partiellement l'induit magnétique (3), cependant que l'induit magnétique (3) comprend dans la zone d'enserrage au moins un canal (3a) axial externe qui contribue à la compensation de pression.

6. Procédé selon la revendication 5, **cependant que,** comme poussoir (4), c'est un composant embouti qui est utilisé.

7. Procédé selon la revendication 5 ou 6, **cependant que,** comme induit magnétique (3), c'est un composant de pression par flux de force qui est utilisé.

8. Procédé selon une des revendications de 5 à 7, **cependant que** la liaison du poussoir (4) et de l'induit magnétique (3) par pressage du poussoir (4) sur le tenon (3b) de l'induit magnétique (3) a lieu de telle façon que, entre une extrémité axiale du poussoir (4) tournée vers l'induit magnétique (3) et une surface partielle axiale de l'induit magnétique (3) tournée vers le poussoir (4), il demeure au moins partiellement un interstice (5).

9. Utilisation d'une vanne magnétique (1) compensée en pression selon une des revendications de 1 à 4 ou d'une vanne magnétique (1) compensée en pression fabriquée selon une des revendications de 5 à 8, dans un système à ressort pneumatique d'un véhicule.
